# EUROPÄISCHE PATENTANMELDUNG

(11) **EP 2 062 660 A1**
(43) Veröffentlichungstag der Anmeldung: **27.05.2009**
(21) Anmeldenummer: 07022583.4
(22) Anmeldetag: 21.11.2007
(51) Int. Cl.: B09B 3/00, H05B 6/80, F23G 7/00

(54) **Verfahren zur Inertisierung von Mineralfasern sowie Mikrowellenkammer zur Ausübung des Verfahrens**

(71) Anmelder: Das Haus Immobiliengesellschaft mbh, 64579 Gernsheim (DE)
(72) Erfinder: Reimann, Marco, 99869 Seebergen (DE)
(74) Vertreter: Schubert, Siegmar

(57) **Zusammenfassung**

Ein Verfahren zur Inertisierung von Mineralfasern unter Mikrowellen-Anwendung soll weniger umweltbelastend durchgeführt werden. Hierzu werden die Mineralfasern ohne Vorzerkleinerung durch Einwirken einer Multi-Mode-Mikrowellenstrahlung verschlackt, anschließend wird das verschlackte Mineralfasermaterial gemahlen und schließlich das aufgemahlene, verschlackte Mineralfasermaterial zu einem Baustoff verarbeitet. Zur Erzeugung der Multi-Mode-Mikrowellenstrahlung wird eine Mikrowellenkammer eingesetzt, in der Magnetrons (4 - 9) die in ihnen erzeugte Mikrowellenenergie direkt in einen Kammerinnenraum (2) im Multi-Mode-Zustand abstrahlen.

## Beschreibung

Die Erfindung betrifft ein Verfahren zur Inertisierung von Mineralfasern gemäß dem Oberbegriff des Anspruchs 1.

Insbesondere betrifft die Erfindung die Inertisierung von Mineralwolle und/oder von Asbest, die mehr oder weniger krebserzeugend oder krebsverdächtig sein können.

Letzteres gilt außer für Asbest für bestimmte Mineralwolle aus der Gruppe synthetischer glasiger Fasern, die aus silikatischen Schmelzen hergestellt werden und deren Ausgangsmaterialien Sedimente oder Eruptivgesteine, wie Basalt, Schiefer, Diabas, sind. Solche Fasern bestehen vorwiegend aus den Oxiden SiO₂, Al₂O₃, CaO, MgO, die chemisch sehr beständig sind. Entsprechende früher verwendete Mineralfaserprodukte können lungengängige Fasern freisetzen, die biobeständig sind und bei bestimmten Längen/Durchmesserverhältnissen tumorbildend sind und dürfen daher gemäß neueren gesetzlichen Bestimmungen nicht mehr verwendet werden. Problematisch ist die althergebrachte Mineralwolle, die in Mineralwolledämmstoffen in Bauten eingesetzt wurde, insbesondere wenn an diesen Abbruch-, Sanierungs- oder Instandhaltungsarbeiten durchgeführt werden und die Mineralwolledämmstoffe entsorgt bzw. weiter verwertet werden, weil dabei die Umwelt und insbesondere die Arbeiter belastet werden können.

Zur Wiederverwertung gebrauchter Mineralwolledämmstoffe ist es bekannt, diese nach Aufmahlen in Ziegelton zu verbringen. Durch das Aufmahlen entsteht ein erhöhtes Faserfreisetzungsrisiko, dem mit einer aufwendigen Filtertechnik, Absaugung und Abschottung zu begegnen ist. Eine Umwandlung solchen Gefahrstoffes in einen unbedenklichen Stoff erfolgt erst im Rahmen des Ziegelbrandes, währenddessen die Faserstruktur zerstört wird. Deswegen muss auch eine Abnahme des Gefahrstoffes im eingekapselten Zustand durch ein Ziegelwerk erfolgen.

Hingegen sind zur Inertisierung bzw. Wiederverwertung von gebrauchtem Asbest eine Vielzahl von Alternativen bekannt, die in chemische, thermische und/oder mechanische Verfahren untergliedert werden können. Zu den thermischen Verfahren gehört eine Mikrowellentechnik-Inertisierung von gebrauchtem Asbestmaterial, der zunächst eine Vorzerkleinerung des Asbestmaterials auf bestimmte Korngrößen (2 - 4 mm) vorangeht. Um das Mikrowellenabsorptionsverhalten des Asbestmaterials zu verbessern, werden diesem vor der Beaufschlagung mit Mikrowellenstrahlung Zusatzstoffe, wie Magnetit, Eisen(III)-Chlorid, Kalilauge und Borax, hinzugefügt. Das asbesthaltige Gemisch wird anschließend während einer vorgegebenen Zeit von ca. 10 min. auf eine Temperatur von größer als 750°C erwärmt, wobei eine Dehydroxylierung und Mineralphasenneubildung zu einem unbedenklichen Stoff erfolgt. Allerdings bedeutet auch hier die Vorzerkleinerung des zu inertisierenden, gebrauchten Asbestmaterials einen kritischen Verfahrensschritt.

Aufgabe der vorliegenden Erfindung ist daher, ein Verfahren zum Inertisieren von Mineralfasern zu konzipieren, welches eine die Umwelt weniger belastende Behandlung und anschließende Verwertung gebrauchten Mineralfasermaterials, insbesondere kanzerogener Mineralwolle gestattet, bei dem die Faseremission in der Prozesskette möglichst früh minimiert wird, wonach unproblematisch ein faserfreies neues Endprodukt erzielt werden kann. Das Verfahren soll auch insofern sicher sein, als die Mineralfaserzerstörung irreversibel ist. Außerdem soll es effizient sein, wozu gehört, dass eine zur Ausübung des Inertisierungsverfahrens geeignete technische Anlage variabel sowohl zur Umwandlung des Gefahrstoffes Asbest als auch von Mineralwolle dienen kann.

Der gleiche anlagentechnische Vorteil soll auch hinsichtlich der Verwertung der in gefahrlose Sekundärrohstoffe umgewandelten Gefahrstoffe Asbest oder althergebrachte Mineralwolle nutzbar sein. Vor allem sollen bei der Verwendung der Sekundärrohstoffe keine zusätzlichen Umweltbelastungen durch Faseremissionen, Abwässer und Abfälle auftreten. Damit sollen insbesondere Deponien entlastet werden.

Zur Lösung dieser Ausgabe wird erfindungsgemäß nach Anspruch 1 die Inertisierung der Mineralfasern durch die Abfolge der Verfahrensschritte erzielt, dass die Mineralfasern bzw. gebrauchtes Mineralfasermaterial ohne Vorzerkleinerung durch Einwirken einer Multi-Mode-Mikrowellenstrahlung verschlackt werden bzw. wird, dass anschließend das verschlackte Mineralfasermaterial gemahlen wird und dass schließlich das aufgemahlene, verschlackte Mineralfasermaterial zu einem Baustoff verarbeitet wird.

Wesentlich ist, dass die Verschlackung der Gefahrstoffe Mineralwolle oder Asbest bereits vor einer umweltbelastenden Vorzerkleinerung erfolgt. Die hierzu eingesetzte Multi-Mode-Mikrowellenstrahlung wird unkompliziert durch direkte Ankopplung wenigstens eines Mikrowellenenergieerzeugers, typisch eines Magnetrons, an einen im wesentlichen geschlossenen Kammerinnenraum einer Mikrowellenkammer erzielt, in welche das zu inertisierende Mineralfasermaterial losweise, d.h. im Batchbetrieb, eingebracht wird. Vorzugsweise sind mehrere Magnetrons an den Kammerinnenraum angekoppelt und weiter bevorzugt auf einander gegenüberliegenden Seiten des Kammerinnenraums. Mit der damit erzeugten Multi-Mode-Mikrowellenstrahlung wird eine gleichmäßige Energieverteilung in dem gesamten Kammerinnenraum erreicht und somit in dem in ihn eingebrachten Mineralfasermaterial eine gleichmäßige Wärmeverteilung ohne lokale Überhitzung erzielt, ohne eine Vorzerkleinerung des Mineralfasermaterials zu bedingen. Die Erwärmung des Mineralfasermaterials erfolgt gleichförmig von innen nach außen, wobei die gewünschte Kerntemperatur mit einem Minimum an eingesetzter Energie erzielt wird. Da durch die Multi-Mode-Mikrowellenstrahlung in dem Kammerinneren keine störenden Energieüberlagerungen auftreten, erzeugen in dem Kammerinnenraum vorhandene Metalle keine Lichtbogen.

In weiter vorteilhafter Weise brauchen nach Anspruch 8 mit den zu inertisierendem Mineralfasern gegebenenfalls verbundene weitere Stoffe, wie Aluminium, Pappe, Teerfolie von den Mineralfasern nicht abgetrennt zu werden, bevor das Mineralfasermaterial der Multi-Mode-Mikrowellenstrahlung ausgesetzt wird.

Die erfindungsgemäß eingesetzte Mikrowellenkammer ist eine Multi-Mode-Mikrowellenkammer, die gemäß Anspruch 15 eine Kammerwand mit Öffnungen zum direkten Anschluss von Magnetrons aufweist sowie gemäß Anspruch 1 6 eine mit einer Tür verschließbare Öffnung zum diskontinuierlichen Einbringen des zu erwärmenden Mineralfasermaterials hat. Die Energiezufuhr in den Kammerinnenraum von den Magnetrons kann bedarfsabhängig gesteuert werden, damit das Mineralfasermaterial eine Temperatur erreicht, bei der die Mineralfasern aufschmelzen und verschlacken. Die Magnetrons sind so in einer Schaltungsanordnung angeordnet, dass sie nur bei geschlossener Tür betriebsbereit sind, d.h. einschaltbar sind, um eingeschaltet zu werden, wenn der Kammerinnenraum beschickt worden ist.

Die Multi-Mode-Mikrowellenstrahlung kann mit einer Kammer- und Magnetronanordnung erzielt werden, wie sie zur Kerntrocknung in Gießereien im Prinzip bekannt ist, wenn sie zur Inertisierung von Mineralfasermaterialien angepasst sind. Letzteres betrifft auch die Betriebsparameter Temperatur und Erwärmungsdauer. Damit ermöglicht die Multi-Mode-Mikrowellenstrahlung in technisch wenig aufwendiger Weise eine umweltschonende und energiesparsame Verschlackung des Mineralfasermaterials, insbesondere kanzerogener Mineralwolle, wie in Laborversuchen eindeutig erprobt wurde.

Das erfindungsgemäße Verfahren eignet sich besonders gemäß Anspruch 2 zur Inertisierung von Mineralfasern in Form von althergebrachter Mineralwolle im Wesentlichen aus Oxiden der Gruppe SiO₂, Al₂O₃, CaO, MgO.

Bei der vorgenannten Mineralwolle erfolgt eine Mikrowellenabsorption durch einen Schlichteüberzug und zweckmäßig gemäß Anspruch 3 bzw. 4 mittels mindestens eines hinzugegebenen Additivs bzw. Zusatzstoffs aus der Gruppe Magnetit, Eisen(III)-Chlorid, Kalilauge und Borax.

Die durch die Multi-Mode-Mikrowellenstrahlung erzielte Temperatur in den Mineralfasern der Mineralwolle soll gemäß Anspruch 5 mindestens 1300°C betragen, die so lange aufrechterhalten wird, bis das Fasermaterial vollständig aufgeschmolzen und verschlackt ist.

Anschließend wird das verschlackte Mineralfasermaterial zu einer Korngröße gemahlen, die für die nachfolgende Verwendung des aufgemahlenen, verschlackten Mineralfasermaterials als Zuschlagsstoff in Baustoffen geeignet ist.

Das Aufmahlen des verschlackten Mineralfasermaterials kann gemäß Anspruch 6 zweckmäßig mit Exzenterschwingmühlen folgen.

Das erfindungsgemäße Verfahren nach Anspruch 1 eignet sich aber auch gut zur Inertisierung von Mineralfasern gemäß Anspruch 7, die Asbest umfassen bzw. aus Asbest bestehen. Es konnte durch Versuche mit Asbestmaterialien festgestellt werden, dass die Multi-Mode-Mikrowellenstrahlung bereits in unzerkleinerten Asbestmaterialien zu einer Zerstörung deren Kristallstruktur führt, wodurch eine Faserfreisetzung bei der nachfolgenden Aufmahlung entscheidend reduziert bzw. minimiert ist und die typischen gesundheitsschädigenden Eigenschaften des Asbests durch deren ursprüngliche Faserstruktur entfallen. Somit kann die Multi-Mode-Mikrowellenbestrahlung des Asbestmaterials ohne dessen vorangehende Zerkleinerung wirkungsvoll eingesetzt werden. Die hierzu benötigte Mikrowellenenergie kann vergleichsweise geringer sein als zur Verschlackung von Mineralfasern in Form von Mineralwolle im Wesentlichen aus Oxiden der Gruppe SiO₂, Al₂O₃, CaO, MgO, da alle Asbestarten Hydroxylwasser enthalten und auf die Aufheizung empfindlich reagieren. Die Multi-Mode-Mikrowellenstrahlungsenergie und/oder deren Einwirkungsdauer können weiter reduziert werden durch Zugabe mindestens eines Zusatzstoffes gemäß den Ansprüchen 3 und 4.

Der technische und wirtschaftliche Aufwand für die Mineralfaserinertisierung ist auch deswegen gering, weil die selbe technische Anlage vorzugsweise mit unterschiedlichen Multi-Mode-Mikrowellenstrahlungsparametern, wie Leistung und/oder Strahlungsdauer, für die Asbest- und/oder Mineralwolleinertisierung eingesetzt werden kann, so dass sich eine gute Auslastung der Anlagenkapazität realisieren lässt. In beiden Fällen kann das entstehende faserfreie Endprodukt, nämlich das aufgemahlene, verschlackte Mineralfasermaterial bei weiterer Verwertung freizügig in Baustoffwerken ohne Belastung der Umwelt verarbeitet werden. Es ist ohne weiteres, insbesondere ohne Abschottung möglich, eine Anlage zur Asbest- und/oder Mineralwolleinertisierung in einem Baustoffwerk zu installieren oder direkt an einer Baustelle zu installieren, wodurch lange Transportwege des zu inertisierenden Mineralfasermaterials entfallen. Hierzu kann die Anlage vorteilhafterweise mobil ausgebildet sein.

Wie oben erwähnt, wird das inertisierte Mikrofasermaterial zweckmäßig als Zuschlagsstoff in Baustoffen verwendet, wobei ein faserfreier Baustoff als Endprodukt gewährleistet werden kann, da die Zerstörung der Fasern des Mikrofasermaterials nicht erst im Verlauf der Baustoffproduktion, beispielsweise eines Ziegelbrandes erfolgt.

Zu den vielfältigen Anwendungsmöglichkeiten des erfindungsgemäß inertisierten Mikrofasermaterials in der Baustoffindustrie gehören die Zementproduktion gemäß Anspruch 9, die Herstellung von Beton, insbesondere Porenbeton gemäß Anspruch 10, die Produktion von Calciumsilikatprodukten, wie künstlichen Kalksandsteinen nach Anspruch 11 und die Ziegelproduktion nach Anspruch 12. Weiterhin kann das erfindungsgemäß inertisierte Mineralfasermaterial zur Mörtelherstellung nach Anspruch 13 sowie in Asphalt nach Anspruch 14 eingesetzt werden.

Alle obigen Anwendungsfälle führen zu einer Einsparung natürlicher Ressourcen und gleichzeitig zur Entlastung von Deponien.

Wesentlicher Bestandteil einer Anlage zur Durchführung des erfindungsgemäßen Inertisierungsverfahrens von Mineralfasern ist, wie oben erwähnt, eine Multi-Mode-Mikrowellenkammer nach Anspruch 15 mit Öffnungen in mindestens einer Kammerwand, in der Magnetrons derart angeordnet sind, dass sie im Betrieb die in ihnen generierte Mikrowellenenergie direkt in den Kammerinnenraum abstrahlen, der von der Kammerwand begrenzt ist. Damit wird im Kammerinnenraum der Mikrowellenkammer in unkomplizierter Weise ein Multi-Mode-Energiefeld erzielt, in dem die Mikrowellenenergie gleichförmig verteilt ist, im Unterschied zu einer Mikrowellenkammer, der die Mikrowellenenergie eines Magnetrons über einen Hohlleiter in nur einer Mode zugeführt wird. Infolge der gleichförmigen Mikrowellenenergieverteilung in dem Kammerinnenraum wird dort eingebrachtes Mineralfasermaterial gleichmäßig erhitzt und verschlackt, wenngleich das Mineralfasermaterial nicht vorzerkleinert ist.

Zum Beschicken der Mikrowellenkammer mit dem zu inertisierenden Mineralfasermaterial ist der Kammerinnenraum gemäß Anspruch 16 durch eine Tür zugänglich, durch die dann das inertisierte, verschlackte Mineralfasermaterial auch entnommen werden kann.

Eine zur Ausübung des erfindungsgemäßen Verfahrens zur Inertisierung von Mineralfasern geeignete Mikrowellenkammer ist in der beigefügten Zeichnung grob schematisch dargestellt. In ihr zeigt:

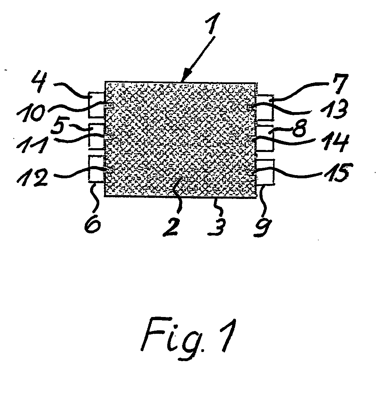

- Figur 1: eine Multi-Mode-Mikrowellenkammer in einem Schnitt, der durch eine vertikale Schnittebene verläuft.

In Figur 1 ist die Multi-Mode-Mikrowellenkammer allgemein mit 1 bezeichnet. Sie weist einen im Wesentlichen quaderförmigen Kammerinnenraum 2 auf, der durch eine Kammerwand 3 eingehüllt ist. An der Kammerwand 3 sind in gleichmäßigen Abständen sechs Magnetrons 4 - 9 so angeordnet, dass diese im Betrieb ihre Mikrowellenenergie durch Öffnungen 10 - 15 in der Kammerwand 3 direkt in den Kammerinnenraum 2 abstrahlen. Die demgemäß in dem Kammerinnenraum 2 auftretende gleichmäßige Energieverteilung der Multi-Mode-Mikrowellenstrah-lung ist durch sich kreuzende Schraffurlinien angedeutet. Damit kann das in die Multi-Mode-Mikrowellenkammer eingebrachte Mineralfasermaterial mit einem Minimum an eingesetzter Energie gleichmäßig auf die zu erreichende Temperatur von wenigstens 1300°C erhitzt werden, bei der das Mineralfasermaterial, insbesondere Mineralwolle aufschmilzt und verschlackt.

Die übrigen Komponenten einer Anlage zur Inertisierung von Mineralfasern, insbesondere die Exzenterschwingmühlen, die bevorzugt zum Aufmahlen des durch die Multi-Mode-Mikrowellenstrahlung verschlackten Mineralfasermaterials verwendet werden, können herkömmlicher Bauart sein.

### Bezugszahlenliste

- 1: Multi-Mode-Mikrowellenkammer
- 2: Kammerinnenraum
- 3: Kammerwand
- 4: Magnetron
- 5: Magnetron
- 6: Magnetron
- 7: Magnetron
- 8: Magnetron
- 9: Magnetron
- 10: Öffnung
- 11: Öffnung
- 12: Öffnung
- 13: Öffnung
- 14: Öffnung
- 15: Öffnung

## Patentansprüche

1. Verfahren zur Inertisierung von Mineralfasern,
**dadurch gekennzeichnet,**
**dass** die Mineralfasern ohne Vorzerkleinerung durch Einwirken einer Multi-Mode-Mikrowellenstrahlung verschlackt werden,
**dass** anschließend das verschlackte Mineralfasermaterial gemahlen wird und
**dass** schließlich das aufgemahlene, verschlackte Mineralfasermaterial zu einem Baustoff verarbeitet wird.

2. Verfahren nach Anspruch 1,
**dadurch gekennzeichnet,**
**dass** die zu inertisierenden Mineralfasern in Form von Mineralwolle im wesentlichen aus Oxiden der Gruppe SiO₂, Al₂O₃, CaO, MgO bestehen.

3. Verfahren nach Anspruch 1 oder 2,
**dadurch gekennzeichnet,**
**dass** den Mineralfasern, insbesondere der Mineralwolle, vor der Einwirkung der Multi-Mode-Mikrowellenstrahlung mindestens ein Zusatzstoff zugegeben wird, welcher Mikrowellenstrahlung absorbiert und in Wärme zum Aufschmelzen der Mineralwolle umwandelt.

4. Verfahren nach Anspruch 3,
**gekennzeichnet durch**
einen Zusatzstoff aus der Gruppe Magnetit, Eisen(III)-Chlorid, Kalilauge und Borax.

5. Verfahren nach Anspruch 3 oder 4,
**dadurch gekennzeichnet,**
**dass** die Mineralwolle durch die Multi-Mode-Mikrowellenstrahlung auf eine Temperatur von mindestens 1300°C so lange aufgeheizt wird, bis das Fasermaterial vollständig aufgeschmolzen und verschlackt ist.

6. Verfahren nach einem der vorangehenden Ansprüche,
**dadurch gekennzeichnet,**
**dass** das verschlackte Mineralfasermaterial mittels Exzenterschwingmühlen aufgemahlen wird.

7. Verfahren nach einem der Ansprüche 1, 3 - 6,
**dadurch gekennzeichnet,**
**dass** die zu inertisierenden Mineralfasern Asbest umfassen.

8. Verfahren nach einem der vorangehenden Ansprüche,
**dadurch gekennzeichnet,**
**dass** die zu inertisierenden Mineralfasern mit weiteren Stoffen, wie Aluminium, Pappe, Teerfolie, verbunden sind und ohne vorangehende Trennung der Multi-Mode-Mikrowellenstrahlung ausgesetzt werden.

9. Verfahren nach einem der vorangehenden Ansprüche,
**dadurch gekennzeichnet,**
**dass** das aufgemahlene, verschlackte Mineralfasermaterial in der Zementproduktion verwendet wird.

10. Verfahren nach einem der Ansprüche 1 - 7,
**dadurch gekennzeichnet,**
**dass** das aufgemahlene, verschlackte Mineralfasermaterial zur Betonherstellung, insbesondere von Porenbeton, verwendet wird.

11. Verfahren nach einem der Ansprüche 1 - 7,
**dadurch gekennzeichnet,**
**dass** das aufgemahlene, verschlackte Mineralfasermaterial zur Herstellung von Calciumsilikathydratprodukten verwendet wird.

12. Verfahren nach einem der Ansprüche 1 - 7,
**dadurch gekennzeichnet,**
**dass** das aufgemahlene, verschlackte Mineralfasermaterial in der Ziegelproduktion eingesetzt wird.

13. Verfahren nach einem der Ansprüche 1 - 7,
**dadurch gekennzeichnet,**
**dass** das aufgemahlene, verschlackte Mineralfasermaterial zur Mörtelherstellung verwendet wird.

14. Verfahren nach einem der Ansprüche 1 - 7,
**dadurch gekennzeichnet,**
**dass** das aufgemahlene, verschlackte Mineralfasermaterial in Asphalt eingesetzt wird.

15. Mikrowellenkammer zur Inertisierung von Mineralfasern nach einem der Ansprüche 1 - 7,
**dadurch gekennzeichnet,**
**dass** in Öffnungen (10 - 15) mindestens einer Kammerwand (3) Magnetrons (4 - 9) derart angeordnet sind, dass sie im Betrieb die in ihnen generierte Mikrowellenenergie direkt in einen Kammerinnenraum (2) im Multi-Mode-Zustand abstrahlen.

16. Mikrowellenkammer nach Anspruch 15,
**dadurch gekennzeichnet,**
**dass** zur batchweisen Inertisierung von Mineralfasern der Kammerinnenraum (2) durch eine Tür beschickbar ist.
